# EUROPEAN PATENT APPLICATION

(11) **EP 2 525 282 A2**
(43) Date of publication of application: **21.11.2012**
(21) Application number: 12162623.8
(22) Date of filing: 30.03.2012
(51) Int. Cl.: G06F 3/048

(54) **Electronic device and method for arranging icons displayed by the electronic device**

(30) Priority: 17.05.2011 KR 20110046335
(71) Applicant: Samsung Electronics Co., Ltd., Suwon-si, Gyeonggi-do, 443-742 (KR)
(72) Inventor: Jang, Si Hak, Gyeonggi-do (KR); Yook, Hyung Min, Gyeonggi-do (KR); Lee, Bong Won, Gyeonggi-do (KR); Hwang, Jae Joon, Gyeonggi-do (KR)
(74) Representative: Jenkins, Richard Gavin

(57) **Abstract**

An electronic device and a method for arranging icons on a screen of the electronic device. In the method, when a user selects an icon displayed on a screen, the device determines whether there is a sub-icon associated with the selected icon. If there is a sub-icon, the device arranges and displays the sub-icon in a radial arrangement on the screen around the selected icon, so the user can visually perceive the relation between the selected icon and its sub-icon, and easily select and use a desired function or data associated with the sub-icon.

## Description

### BACKGROUND OF THE INVENTION

### Field of the Invention

The present invention relates in general to icon arrangement and display technologies for an electronic device and, more particularly, to an electronic device and a method for displaying at least one sub-icon associated with a specific icon when the specific icon is selected.

### Description of the Related Art

In general, an electronic device such as a mobile device or a portable device may include a screen, such as a touch screen, which displays actuatable icons to which executable functions and stored data are assigned respectively. These icons may be arranged in typical formats or graphical arrangements such as grid type, ring type, page type, scroll type, and the like. When a user selects one of the actuatable icons displayed on the screen of the device, the device may execute a specific function assigned to the selected icon or may display stored data assigned to the selected icon.

As many more users use electronic devices, executable functions and stored data types for such devices become increasingly diverse in order to meet increasing demands for new and specific functions by users. This causes an increase in the number of icons displayed on the screen of the device.

Typically, the device displays selected icons on the screen at default locations predetermined during fabrication and initial configuration of the device by the manufacturer, or at locations on the screen designated by a user. Furthermore, the device may employ an icon tree architecture composed of icons and their sub-icons, which graphically represent hierarchical relations to functions and data.

However, when one of the icons is selected by a user, the device may merely arrange sub-icons of the selected icon in a line. Since such screens are limited in size, the linear arrangement of sub-icons is a disadvantage, by requiring the user to scroll and search through all of the sub-icons to find and access various functions of the device. In order to enhance the functionality and visual appeal of such icons for users, an enhanced technique to dynamically display a relation between the icon and sub-icons on the screen is required.

### SUMMARY OF THE INVENTION

Accordingly, the present invention addresses the above-mentioned problems and/or disadvantages and offers at least the advantages described below.

An aspect of the present invention is to provide an electronic device and a method for arranging icons on a screen of the device.

According to one aspect of the present invention, a method arranges icons on the screen of an electronic device, the method comprising: when a user selects at least one icon displayed on a screen, determining whether a sub-icon is associated with the selected icon; and if the sub-icon exists, arranging and displaying the sub-icon in a radial arrangement on the screen around the selected icon.

According to another aspect of the present invention, an electronic device comprises: a display unit with a screen configured to display at least one icon on the screen; and a control unit configured to determine, in response to a user selecting at least one icon, whether a sub-icon is associated with the selected icon, and if the sub-icon exists, to arrange and display the sub-icon in a radial arrangement around the selected icon.

### BRIEF DESCRIPTION OF THE DRAWINGS

The above features and advantages of the invention will become more apparent from the following description taken in conjunction with the accompanying drawings in which:
FIG. 1 is a block diagram illustrating an electronic device in accordance with an exemplary embodiment of the present invention;
FIGS. 2A, 2B, and 2C are a series of views illustrating a progression of screens of the electronic device on which a specific icon is selected and then sub-icons of the selected icon are arranged in accordance with a first exemplary embodiment of the present invention;
FIG. 3 is a view illustrating a screen that displays a selected icon and its sub-icons in accordance with a second exemplary embodiment of the present invention;
FIG. 4 is a view illustrating a screen that displays a selected icon and its sub-icons in accordance with a third exemplary embodiment of the present invention; and
FIG. 5 is a flow diagram illustrating a method for arranging icons in accordance with the exemplary embodiments of the present invention.

### DETAILED DESCRIPTION OF THE INVENTION

Preferred embodiments of the present invention will now be described herein below with reference to the accompanying drawings. This invention may, however, be embodied in many different forms and should not be construed as limited to the exemplary embodiments set forth herein. For the purpose of clarity and simplicity, well-known functions or constructions are not described in detail as they would obscure the invention in unnecessary detail. Also, terms described herein, which are defined considering the functions of the present invention, may be implemented differently depending on user and operator's intention and practice. Therefore, the terms should be understood on the basis of the disclosure throughout the specification. The principles and features of this invention may be employed in varied and numerous embodiments without departing from the scope of the invention.

Furthermore, although the drawings represent exemplary embodiments of the invention, the drawings are not necessarily to scale and certain features may be exaggerated or omitted in order to more clearly illustrate and explain the present invention.

Among the terms set forth herein, an electronic device refers to any kind of device capable of processing data which is transmitted or received to or from any external entity. The electronic device may display icons on a screen to which stored data and various executable functions are assigned or mapped. The electronic device may include a computer, a notebook, a tablet PC, a mobile device, and the like. The following description illustrates the present invention in which the example electronic device is a smart phone.

Among the terms set forth herein, a screen refers to a display or other output devices which visually display information to the user, and which optionally are capable of receiving and electronically processing tactile inputs from a user using a stylo, a finger of the user, or other techniques for conveying a user selection from the user to the output devices. The following description illustrates the present invention in which the example screen is a touch screen.

Among the terms set forth herein, an icon refers to a graphical element such as a figure or a symbol displayed on the screen of the device such that a user can easily select a desired function or data. In particular, each icon has a mapping relation with any function being executable in the device or with any data stored in the device and is used for processing functions or selecting data in the device. When a user selects one of the displayed icons, the device identifies a particular function or data associated with the selected icon. Then the device executes the identified function or displays the identified data.

Among terms set forth herein, a sub-icon refers to any kind of subordinate icon located in the next depth in a graphical tree architecture associated with the icon. In the case where the icon correlates with a specific menu of functions, the sub-icon may be an icon that correlates with a sub-menu of the specific menu. In the case where the icon correlates with a specific folder in which data is stored in a memory of the device or a remote memory accessible by the device, the sub-icon may be an icon that correlates with data stored in the specific folder.

Among terms set forth herein, data refers to any kind of information processed by the device, including text and/or images received from any external entities, messages transmitted or received, and information created when a specific function is executed by the device.

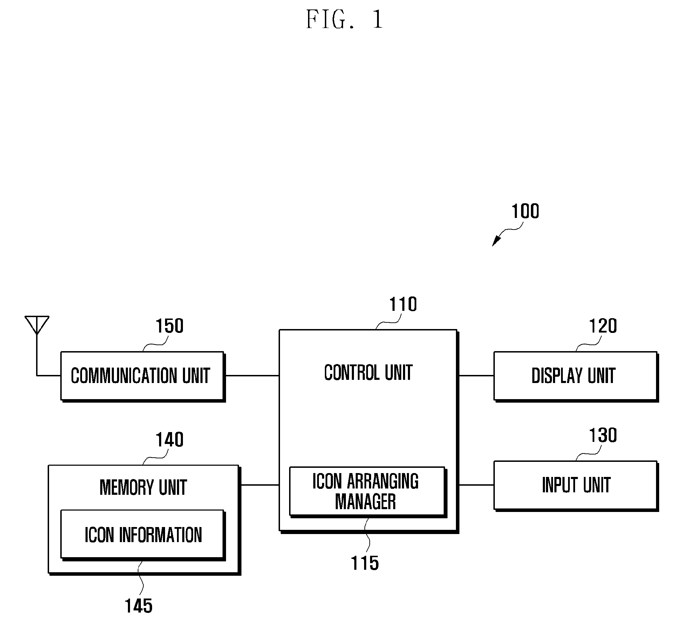

FIG. 1 is a block diagram illustrating an electronic device in accordance with an exemplary embodiment of the present invention.

Referring to FIG. 1, the device 100 includes, but is not limited to, a control unit 110, a display unit 120, an input unit 130, a memory unit 140, and a communication unit 150.

The control unit 110 controls various operations of the device 100, controls any signal flow between internal elements in the device 100, and performs a data processing function. In particular, the control unit 110 controls the display unit 120 to display at least one icon visible to a user of the device. Additionally, when a specific one of the displayed icons is selected by a user using the input unit 130, the control unit 110 may allow sub-icons of the selected icon to be displayed in a radial arrangement. For example, the control unit 110 controls the display unit 120 to arrange and display the sub-icons radially around the selected icon. To implement such a display of the sub-icons, the control unit 110 includes an icon arranging manager 115.

When a specific one of the displayed icons is selected, the icon arranging manager 115 may identify the sub-icons associated with the selected icon and then arrange the sub-icons in a radial form by controlling the display unit 120. In particular, the icon arranging manager 115 may arrange the sub-icons around the selected icon according to a predetermined order of their priorities. The priority of a sub-icon may be defined, for example, by the selection frequency of the sub-icon, the creation time of the sub-icon, associated attributes of the sub-icon, and the like.

The selection frequency includes, for example, the frequency of execution, the frequency of communication, the frequency of playback, etc. in connection with the execution or use of functions or data that are associated with the sub-icon. If the sub-icon is associated with the execution of a function, the priority of the sub-icon may be determined on the basis of the frequency of function execution. If the sub-icon correlates with user information stored, for example, in the memory unit 140 in the device 100, the priority may be determined on the basis of the frequency of communication of the user information into and out of the device 100, for example, inputs of user information such as telephone numbers or addresses to be stored in the memory unit 140.

If the sub-icon correlates with the playback command of music or video files, the priority may be determined on the basis of the frequency of file playback.

The creation time of a sub-icon may be defined as, for example, the time when data correlated with the sub-icon is created. If data correlated with the sub-icon is a photo file, the shooting time of a photo is the creation time of sub-icon. If data correlated with the sub-icon is a message, the transmitted or received time of the message is the creation time of the sub-icon. In these cases, a recent creation time of data may result in high priority of the sub-icon.

The attribute of a sub-icon may be defined as, for example, a category of functions correlated with the sub-icon or a group for classification of data correlated with the sub-icon. The group of data may be determined according to data format, the degree of association, and the like, depending on a user's selection.

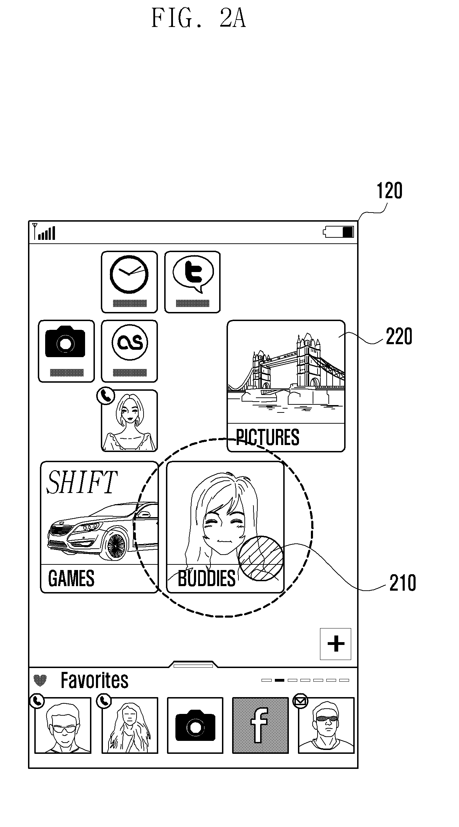

The icon arranging manager 115 arranges the sub-icons in a displayed arrangement on the screen around the selected icon in the order of their priorities, with the distances of sub-icons from the selected icon being predetermined, for example, from distance settings stored in the memory unit 140. Therefore, a sub-icon with high priority is located at a relatively close distance from the selected icon, and a sub-icon with low priority is located at a relatively far distance from the selected icon. Exemplary methods by which the icon arranging manager 115 arranges the sub-icons around the selected icon in the order of their priorities will be described below with reference to FIGS. 2A to 4.

The display unit 120 displays a variety of information related to the state and operation of the device 100. The display unit 120 may have a liquid crystal display (LCD), an LCD controller, a memory for storing image data, etc., and may include a touch screen. In the case of a touch screen, the display unit 120 may perform an input function in conjunction with or independent of the input unit 130. In particular, the display unit 120 may display a plurality of icons under the control of the control unit 110.

If the screen displays a plurality of icons, when a specific one of the displayed icons is selected by the user, the display unit 120 may alter the appearance of the icons, for example, to show a dimmed display effect associated with all icons except the selected icon under the control of the control unit 110. That is, the non-selected icons have a dimmer appearance relative to the selected icon. Then the display unit 120 displays the sub-icons of the selected icon in a radial arrangement relative to the selected icon under the control of the control unit 110. In this example, the display unit 120 may display the sub-icons to overlay the dimmed icons under the control of the control unit 110. Alternatively, the display unit 120 may remove all icons except the selected icon from the screen under the control of the control unit 110.

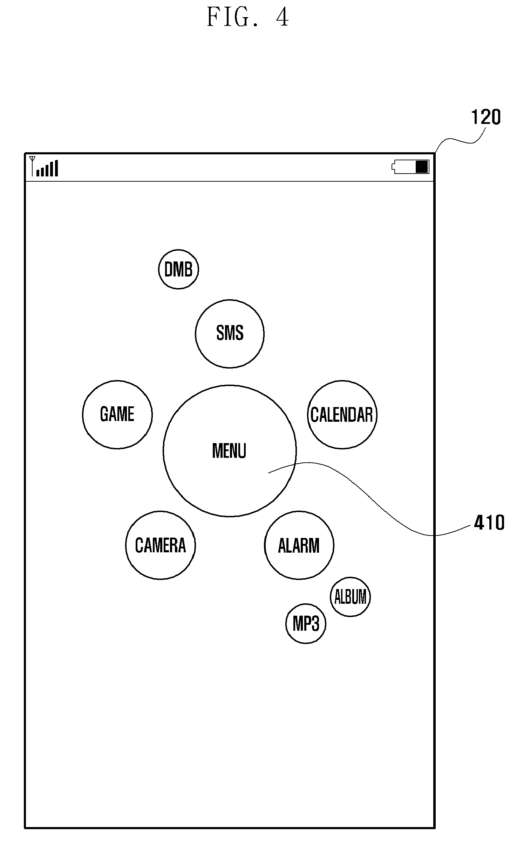

Furthermore, the display unit 120 may rearrange the selected icon to be displayed at the center of the screen under the control of the control unit 110; for example, as shown in FIG. 4. Then the display unit 120 displays the sub-icons around the centrally located selected icon in a radial arrangement under the control of the control unit 110.

The input unit 130 includes a plurality of input keys that create input signals for entering numerical or text information, and function keys that create input signals for setting or controlling various functions of the device 100. These input signals are transmitted to the control unit 110. The input unit 130 may be implemented as one of or a combination of a touch pad, a touch screen, a keypad with a standard key layout, and a keypad with a QWERTY key layout. In particular, the input unit 130 sends an input signal for selecting a specific one of the icons displayed on the display unit 120 to the control unit 110.

The memory unit 140 stores a variety of programs and data required for or processed during operations of the device 100. In particular, the memory unit 140 stores icon information 145 that may be displayed on the display unit 120 under the control of the control unit 110. The icon information 145 includes information about the icons that correlate with respective executable functions or stored data in the device 100, information about sub-icons associated with each icon, and information about priorities of sub-icons. The priority of each sub-icon is defined by the selection frequency of the sub-icon, the creation time of the sub-icon, the attribute of the sub-icon, and the like, as described herein.

The communication unit 150 may send or receive data to or from any external device. For example, the communication unit 150 establishes communication channels with a base station and then implements voice communication, a video communication, and a data communication for sending or receiving messages, images, etc. For such communications, the communication unit 150 may include, for example, a radio frequency (RF) transmitter that up-converts the frequency of an outgoing signal and then amplifies the signal, and an RF receiver that amplifies with low-noise an incoming signal and then down-converts the frequency of the signal.

Although not illustrated in FIG. 1, the device 100 of the present invention may also include any other known elements or components such as a camera module, a digital multimedia broadcasting (DMB) receiving module, an Internet access module, and the like. Such elements may be varied, modified and improved in various ways, and any other elements equivalent to the above elements may be additionally or alternatively equipped in the device 100. In addition, as will be understood by those skilled in the art, some of the above-mentioned examples of elements in the mobile device 100 may be omitted or replaced with other elements known in the art.

The device 100 having the above-discussed elements may display at least one icon on the display unit 120 and then, in response to a selection of one of the displayed icons, display sub-icons of the selected icon in a radial arrangement. Specifically, when one of the displayed icons is selected, the device 100 may alter the appearance of the icons, for example, to show a dimmed display effect associated with all icons except the selected icon. Then the device 100 arranges the sub-icons associated with the selected icon in the order of their priorities in a radial arrangement; for example, the sub-icons are arranged around the selected icon. This arrangement method for icons may allow a user to intuitively perceive the selected icon and its sub-icons and to distinguish frequently used functions from others by distances between the icon and sub-icons.

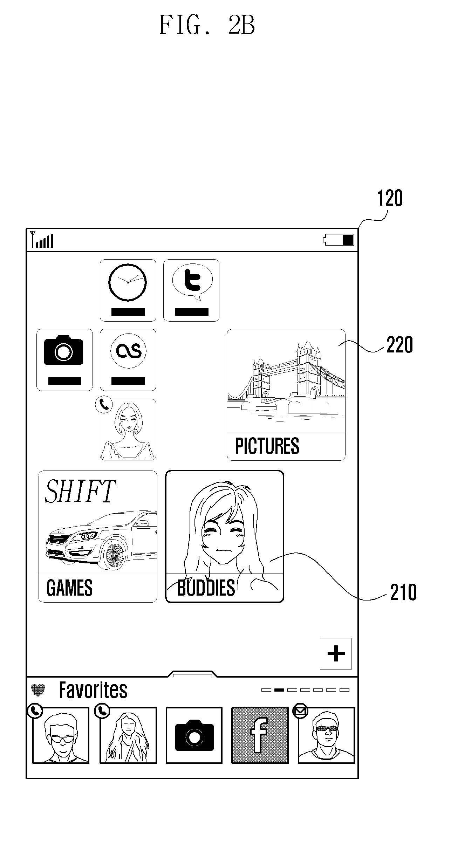

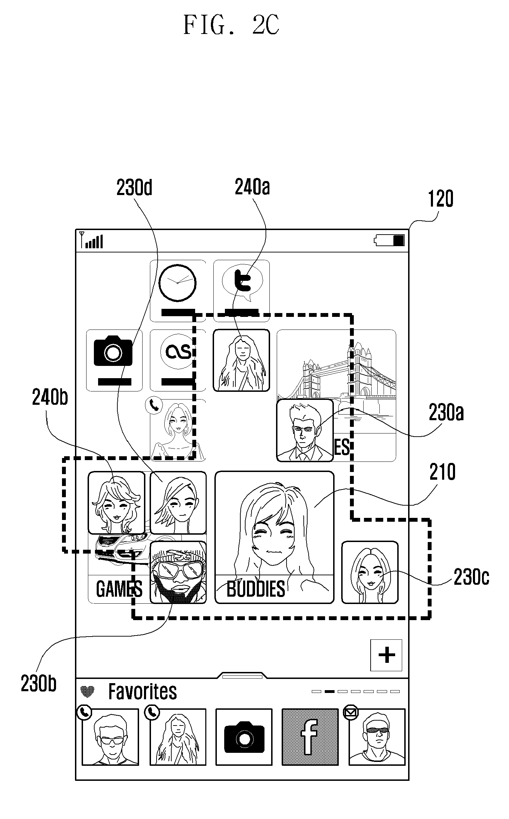

FIGS. 2A, 2B, and 2C are a series of views illustrating a progression of screens of the electronic device 100 on which a specific icon is selected and then sub-icons of the selected icon are arranged in accordance with the first exemplary embodiment of the present invention.

Referring to FIG. 2A, a user selects a specific icon 210 among a plurality of displayed icons 210 and 220. Then the device 100 alters the appearance of the icons to show a dimmed display effect for all icons 220 other than the selected icon 210 as shown in FIG. 2B. Also, the device 100 displays and arranges sub-icons 230a, 230b, 230c, 230d, 240a and 240b, associated with the selected icon 210, around the selected icon 210 in a radial arrangement, as shown in FIG. 2C. In the example shown in FIG. 2C, the sub-icons 230a, 230b, 230c, 230d, 240a and 240b are arranged according to their predetermined and associated priorities, which may be stored in the icon information 145 in the memory unit 140. For example, sub-icons with higher priorities are located at relatively close distances from the selected icon 210.

As shown in FIG. 2C, some sub-icons 230a, 230b, 230c and 230d are displayed to be located relatively nearer to the selected icon 210 than the other sub-icons 240a and 240b. Thus, in this example, the nearer sub-icons 230a, 230b, 230c and 230d may have higher priorities than the distant sub-icons 240a and 240b.

In a second example embodiment, referring to FIG. 2A, the selected icon 210 is correlated with a folder of buddies; that is, friends and associates of the user, from which information about frequently contacted parties can be found. Then the device 100 alters the appearance of the icons 220 to show a dimmed display effect for all icons 220 other than the selected icon 210, corresponding to the folder of buddies, as shown in FIG. 2B. Also, the device 100 arranges sub-icons 230a, 230b, 230c, 230d, 240a and 240b, contained in the folder of buddies, around the selected icon 210 in a radial arrangement as shown in FIG. 2C. In this second example embodiment, the sub-icons 230a, 230b, 230c, 230d, 240a and 240b are correlated with information about devices of frequently contacted parties, and may be represented as one of a photo image, a phone number, and a name.

The device 100 displays the sub-icons 230a, 230b, 230c, 230d, 240a and 240b according to the frequency of communication as priority. For example, the device 100 first arranges the sub-icons with higher frequency of communication around the selected icon in a radial arrangement. As shown in FIG. 2C, some sub-icons 230a, 230b, 230c and 230d are relatively nearer to the selected icon 210 than the other sub-icons 240a and 240b. Thus, the frequency of communication with the devices correlated with the nearer sub-icons 230a, 230b, 230c and 230d is greater than the frequency of communication with the devices correlated with the more distant sub-icons 240a and 240b.

FIG. 2C shows the sub-icons arranged in four directions around the selected icon 210. This is, however, exemplary only and not to be considered as a limitation of the present invention. Alternatively, the device 100 may arrange the sub-icons in various directions around the selected icon. Also, instead of determining the distances from the sub-icons to the selected icon by the priorities of the sub-icons, the device 100 may determine the displayed sizes of sub-icons by their priorities. For example, as shown in FIG. 2C, sub-icons 240a and 240b may be displayed to be noticeably smaller relative to the size of sub-icons 230a, 230b, 230c, and 230d. In another example embodiment, the device 100 may arrange the sub-icons in a radial arrangement according to their attributes.

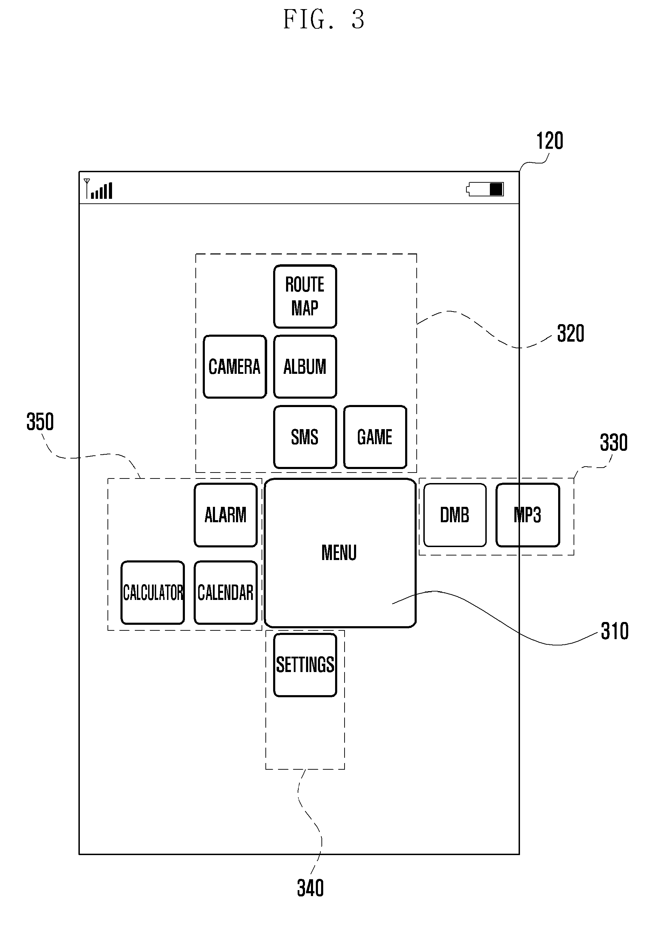

FIG. 3 is a view illustrating a screen that displays a selected icon and its sub-icons in accordance with the second exemplary embodiment of the present invention.

Referring to FIG. 3, when an icon of rectangular type is selected, sub-icons of the selected icon are classified according to their attributes and then displayed in a radial arrangement on the screen.

The device 100 may classify all sub-icons of the selected icon into categories or groups and then arrange them in a radial arrangement. In an example embodiment, the selected icon may be a menu icon 310. Functions in the menu may be classified into a favorite function category containing frequently used functions, a file playback category containing playable files such as video files and music files, a setting category specifying the operating settings of the device 100, a schedule category allowing the management of user schedule, and the like.

The favorite function category may contain functions such as short message service (SMS), games, camera, albums, route maps, etc., and the file playback category may contain DMB files, MP3 (MPEG audio layer-3) files, etc. The setting category may contain settings for background images, sounds, call settings, message settings, etc., and the schedule category may contain an alarm, a calendar, a calculator, etc.

Referring to FIG. 3, when a user selects the menu icon 310 among all displayed icons, the device 100 arranges and displays the sub-icons correlated with functions of a menu, with the sub-icons displayed around the selected icon 310 in a radial arrangement. In this example, the device 100 classifies the sub-icons into categories and then displays them. For example, the device 100 displays the first sub-icons 320 corresponding to the favorite category in a first direction from the selected icon 310 such as above the icon 310. Similarly, the device 100 displays the second sub-icons 330 corresponding to the file playback category in a second direction such as to the right of the icon 310, displays the third sub-icons 340 corresponding to the setting category in a third direction such as below the icon 310, and displays the fourth sub-icons 350 corresponding to the schedule category in a fourth direction such as to the left of icon 310.

In each of the above directions, the sub-icons may be arranged according to their priorities. For example, in each category, the device 100 may display the sub-icon correlated with a frequently used function at a relatively close distance from the selected icon. At least two sub-icons having the same priorities may be displayed nearby in parallel at the same distance.

FIG. 4 is a view illustrating a screen that displays a selected icon and its sub-icons in accordance with the third exemplary embodiment of the present invention.

Referring to FIG. 4, the device 100 may arrange the sub-icons in several directions. In the previous examples described in connection with FIGS. 2A-2C and 3, the sub-icons are arranged in four directions from the selected icon. However, the sub-icons may be arranged in any other directions that constitute various radial arrangements around the selected icon. As shown in FIG. 4, the sub-icons may be arranged in five directions from the selected icon 410.

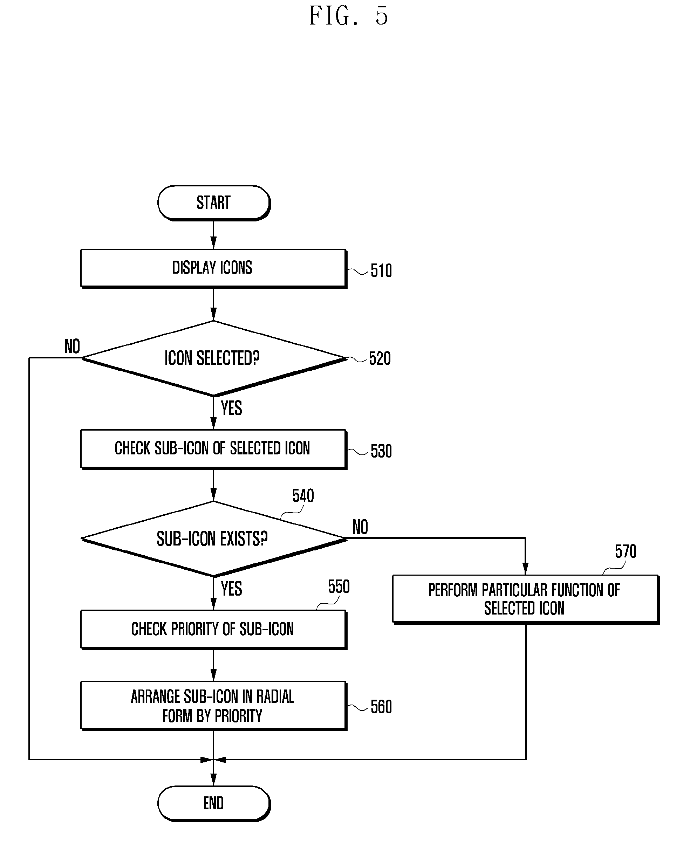

FIG. 5 is a flow diagram illustrating a method for arranging icons in accordance with an exemplary embodiment of the present invention.

Referring to FIG. 5, in step 510, the device 100 displays at least one icon on the screen of the display unit 120. In this step 510, the device 100 may display at least one icon in an idle screen, which may also be referred to, by those skilled in the art, as a main screen or a home screen, and may also display at least one icon in any subsequent depth screen; that is, associated screens accessed by the user selecting other files, folders, or menu options in a tree architecture of choices of various depths, as would be understood by those skilled in the art.

In step 520, the device 100 determines whether one of the displayed icons is selected. If no icon is selected, the icon checking procedure ends, to be repeated at a later time during regular subroutine processing by the device 100, in a manner understood by those skilled in the art.

If any icon is selected as determined in step 520, the device 100 checks sub-icons of the selected icon in step 530; for example, by accessing the icon information 145 stored in the memory unit 140 of the device 100. Additionally, even though not illustrated, the method shown in FIG. 5 may include a step before or after step 530, in which the device 100 alters the appearance of the icons to show a dimmed display effect for all icons except the selected icon, as described herein.

In step 540, the device 100 determines whether there is any sub-icon associated with the selected icon. If any sub-icon exists, the device 100 checks the priority of the sub-icon in step 550. The priority of sub-icon may be defined by the selection frequency of the sub-icon, the creation time of the sub-icon, the attribute of the sub-icon, and the like.

In step 560, the device 100 displays the sub-icon to be arranged around the selected icon in a radial arrangement according to priority such that the sub-icon may overlay the dimmed icons. Although not illustrated, the device 100 may enlarge the selected icon alone and then display the sub-icons around the enlarged icon in a radial arrangement.

Alternatively or additionally, the device 100 may rearrange the selected icon to be displayed at the center of the screen and then display the sub-icons around the centrally located icon in a radial arrangement.

Thereafter, the device 100 may execute a particular function or display data, associated with the sub-icon, in response to a user's selection of sub-icons. If there is any sub-icon with a second depth associated with the selected sub-icon, the device 100 may arrange the sub-icons with the second depth to be displayed around the selected sub-icon in a radial arrangement according to priorities. Also, the device 100 may return to the previous screen containing the icons only in response to a user's command.

Returning to the step 540, if there is no sub-icon associated with the selected icon, the device 100 performs a particular function of the selected icon in step 570. For example, after checking a function or data associated with the selected icon, the device 100 may execute the function or display the data.

As discussed in greater detail hereinbefore, when one of the icons displayed on the screen is selected as determined in step 520, the device 100 may alter the appearance of the icons to show a dimmed display effect for all icons except the selected icon. Additionally, the device 100 may retrieve sub-icons associated with the selected icon and then arrange the sub-icons around the selected icon in a radial arrangement. In such an additional embodiment, the sub-icons are arranged according to their priorities. For example, a sub-icon with high priority is displayed to be at a relatively close distance from the selected icon, and a sub-icon with low priority is located at a relatively far distance from the selected icon.

Alternatively or additionally, the selected icon may be enlarged in size or rearranged to be displayed in the center of the screen by the device 100. Also, after one of the icons is selected, the device 100 may remove the non-selected icons from the screen. Furthermore, when the sub-icons are arranged around the selected icon in a radial arrangement, the device 100 may adjust the sizes of sub-icons according to their priorities. For example, a sub-icon with high priority may be displayed to have a relatively great size, and a sub-icon with low priority may be displayed to have a relatively small size.

By the above-discussed process, the device 100 may provide the selected icon and its sub-icons in a single screen view. Therefore, a user can visually perceive the relation between the selected icon and its sub-icons, and easily select and use a desired function or data.

The above-described methods according to the present invention can be implemented in hardware, firmware or as software or computer code that can be stored in a recording medium such as a CD ROM, an RAM, a floppy disk, a hard disk, or a magneto-optical disk or downloaded over a network and stored on a non-transitory machine readable medium, so that the methods described herein can be rendered in such software using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While this invention has been particularly shown and described with reference to an exemplary embodiment thereof, it will be understood by those skilled in the art that various changes in form and details may be made therein without departing from the spirit and scope of the invention as defined by the appended claims.

## Claims

1. A method for arranging icons an electronic device, the method comprising:
when at least one icon displayed on a screen is selected, determining whether there is a sub-icon associated with the selected icon; and
if there is the sub-icon, arranging and displaying the sub-icon in a radial arrangement on the screen around the selected icon.

2. The method of claim 1, wherein the arranging and displaying of the sub-icon includes:
checking a priority of the sub-icon; and
displaying the sub-icon at a predetermined distance from the selected icon according to the priority.

3. The method of claim 2, further comprising:
giving a dimmed display effect to all icons except the selected icon.

4. The method of claim 3, further comprising:
rearranging the selected icon to be displayed at the center of the screen.

5. The method of claim 2, wherein the arranging and displaying of the sub-icon further includes:
determining a display size of the sub-icon according to the priority.

6. The method of claim 2, wherein the priority is determined by one of the selection frequency of the sub-icon, a creation time of the sub-icon, and an attribute of the sub-icon.

7. The method of claim 1, further comprising:
displaying the selected icon larger than the others.

8. An electronic device for arranging icons, the electronic device comprising:
a display unit configured to display at least one icon on a screen; and
a control unit configured to, when at least one icon is selected, determine whether there is a sub-icon associated with the selected icon, and if there is the sub-icon, to arrange and display the sub-icon in a radial arrangement around the selected icon.

9. The device of claim 8, wherein the control unit is further configured to check a priority of the sub-icon, and to display the sub-icon at a predetermined distance from the selected icon according to the priority.

10. The device of claim 9, wherein the control unit is further configured to give a dimmed display effect to all icons except the selected icon.

11. The device of claim 10, wherein the control unit is further configured to rearrange the selected icon to be displayed at the center of the screen.

12. The device of claim 9, wherein the control unit is further configured to determine a display size of the sub-icon according to the priority.

13. The device of claim 9, wherein the priority is defined by one of the selection frequency of the sub-icon, a creation time of the sub-icon, and an attribute of the sub-icon.

14. The device of claim 9, wherein the control unit is further configured to displayi the selected icon larger than the others.
